# EUROPEAN PATENT SPECIFICATION

(11) **EP 1 260 087 B1**
(45) Date of publication and mention of the grant of the patent: **11.02.2004**
(21) Application number: 01919500.7
(22) Date of filing: 14.03.2001
(51) Int. Cl.: H04M 3/42, H04Q 3/00

(54) **SERVICE DEVELOPMENT ENVIRONMENT**
DIENSTENENTWICKLUNGSUMGEBUNG
ENVIRONNEMENT DE DEVELOPPEMENT DE SERVICES

(30) Priority: 14.03.2000 FI 20000591
(43) Date of publication of application: 27.11.2002
(73) Proprietor: Sonera Oyj, 00510 Helsinki (FI)
(72) Inventor: MOILANEN, Iris, FIN-90650 Oulu (FI); KANKARE, Janne, FIN-00330 Helsinki (FI); PERÄ, Olli, FIN-90570 Oulu (FI); LEPPÄNEN, Osmo, FIN-15240 Lahti (FI); TIMONEN, Petri, FIN-00200 Helsinki (FI); GRÖHN, Tuomo, FIN-00650 Helsinki (FI)
(74) Representative: Simmelvuo, Markku
(86) International application number: PCT/FI2001/000252
(87) International publication number: WO 2001/069904

(56) References cited:
- WO-A1-00/11885
- WO-A1-97/22197
- WO-A1-99/62273
- US-A- 5 579 309
- GBAGUIDI C. ET AL.: 'Integration of internet and telecommunications: an architecture for hydrid services' IEEE JOURNAL ON SELECTED AREAS IN COMMUNICATIONS, IEEE vol. 17, no. 9, September 1999, pages 1563 - 1579, XP000851771
- WANG-CHIEN LEE, MITCHELL G.: 'A framework for TMN-CORBA interoperability' NETWORKS OPERATIONS AND MANAGEMENT SYMPOS. I IM NOMS 98, IEEE 15 February 1998 - 20 February 1998, XP000799764

## Description

The invention relates to telecommunication systems. In particular, the invention relates to a new and improved service development environment in a telephone network, particularly in its intelligent network part.

### PRIOR ART

By means of intelligent networks (IN, Intelligent Networks), companies and especially telephone operators are given the possibility to offer better services. In the intelligent networks, the intelligence is not disposed in the switches but in the computer units which are disposed in different parts of the network. Thanks to the intelligent networks, the operators have the possibility, under certain conditions, to create their own services without having to take the network topology into account.

One specific objective of the intelligent networks is to produce new services into the telecommunication networks. This means that there is a wish to turn the network into a programmable basis the operation of which can be easily and flexibly changed by means of external controlling and management programs. The operators must have the ability and possibility to do these changes. In order that the advantages enabled by the intelligent network would be gained, the service management system and the applications have to be well integrated. This means that the whole network can be managed from one point and therefore less resources are needed. Also the development will quicken and the changes will become more flexible.

The substantial advantage of the intelligent network architecture is that new services may be implemented by means of a centralized database without having to do the changes in every place separately. Since the databases have standardized interfaces, services may be implemented by means of a centralized database regardless of the technologies used in the databases and telephone exchanges.

Previously, selections connected with a certain call have been made in all telephone exchanges through which the call has been connected. The producing of new services has required changes at many different points. Therefore, the producing of new services has been difficult. In the intelligent networks there are one or more key elements which control the calls and services. In the telephone exchanges, centralized operations may be used for the management of calls. Operations are being managed by different instructions, examples of which may be, e.g. a new number, notification of where the call is directed to and interruption of call.

In conjunction with the intelligent networks, a set of functions are defined that have to be implemented in order that one may get the possibility of producing the desired services. The operations have been implemented in different components, which are the service switching point (Service Switching Point, SSP), service control point (Service Control Point, SCP), service management point (Service Management Point, SMP), service creation environment (Service Creation Environment, SCE) and intelligent peripherals (Intelligent Peripheral, IP).

SSP is the switching point of the intelligent network. It is a digital telephone exchange used in the network that functions in a way as required by the intelligent network. In the SSP, the calls are connected in accordance with the connection information received from the SCP. SCP is one of the most important parts of the intelligent networks. In the SCP there is located the intelligence which is needed for the controlling of the intelligent network services. It contains the logic programs needed for the provision of services, and a centralized database. SCP has been optimized very fast and effective as concerns its capacity. In order that the services could be made more reliable, several SCPs may contain the same programs.

By means of the SMP, the management of services and the client control are taken care of. SMP offers operations by means of which the network operators attend to and control the features of the network services, the information of the service subscribers and the changes in the configuration of services. SMP stores, e.g. the billing information of subscribers. By means of an intelligent terminal device one may transmit notifications to the parties of the telephone call. It enables also the interactive connections by means of which one may do selections and retrieve additional information using a tone dialing telephone.

SCE is a service creation environment which offers services for the fast creation of new services using an object-oriented programming technique, which is managed by a graphic user interface. There are in use also modern building elements that can be managed by a graphic user interface. By means of the SCE, the services may also be simulated before their introduction.

By means of the tools provided by the SCE, the planning time required by the new service may be remarkably shortened as compared to the implementation of a corresponding service in a telephone exchange. This naturally requires that in the tools of the SCE, thoroughly tested building blocks are used. At present, the service development environments are rather strongly bound to the architecture solutions of the supplier's own.

The basic elements of the intelligent networks are the service elements (SIB, Service Independent Building Block). SIBs are independent of the architecture and each one of them has an interface to one or more inputs and one or more responses. SIBs are reusable modular building blocks which describe one facility. A service may consist of more than one such basic building block. The possibility of mutual combination of elements provides flexibility in the creation of the services.

From the point of view of the service developer, the present architecture of the service development environment of the intelligent network has been implemented imperfectly in that sense that the interfaces and facilities provided by the service development environments are on the one hand either easy-to-use, in which case the facilities are not flexible, or on the other hand the facilities are flexible, but they are difficult in use. In addition, the problem with the present development environments is that all the services have to be built in accordance with the same structures utilizing device manufacturer-specific or standardized SIBs or service logic programs (SLP, Service Logic Program). This weakens the operator's possibilities to create specific applications and the creation of client-specific customized services. Consequently, the service development environment provides interfaces of just one level throughout the whole life cycle of the service.

One example of the inflexible creation environment described above could be the use of a timer. When the service developer would like to use a timer differing from a regular one, it is not possible because the service the developer uses does not offer the parameter of the timer in its set of parameters. It is a setting of some lower level.

Prior art includes article "Integration of internet and telecommunications: an architecture for hybrid services", GBAGUIDI C. ET AL., IEEE JOURNAL ON SELECTED AREAS IN COMMUNICATIONS, IEEE, 17/9/00-09-1999, pages 1563-1579; article "A Framework for TMN-CORBA interoperability", Wang-Chien Lee & Gail Mitchell, Networks Operations and Management Symposium, I IM NOMS 98, IEEE 15-20 Feb. 1998; as well as documents WO-A1-9962273, WO-A1-9222197, WO-A1-0011885, and US-A-5579309. However, none of these references disclose an idea of an uppermost layer of a layer architecture invoking direct communication with each of the layers below in the architecture.

The objective of the present invention is to eliminate the aforementioned drawbacks and disadvantages of the present service development environments. One specific objective of the invention is to implement an architecture of the service development environment of the telephone network that at the same time adds to the flexibility and ease of the service development.

### BRIEF DESCRIPTION OF THE INVENTION

The service creation environment is built from layers in such a way that the lowermost layer offers all the facilities of the network signaling. The layers above it use the facilities of the lower layers and together with the lower layers provide the upper layers with completed facilities and services. If required, the upper layers and services may use directly the facilities offered by any layer.

Consequently, in the invention, the service development environment is implemented, e.g. in the intelligent network of the telephone network. The service development environment comprises a set of services (SLP), which were discussed more closely above. It is not the purpose herein to restrict the services to a certain group, instead the set of services may be as large as any. As concerns the invention, it is important that the aforementioned services are grouped in layers so that each of the layers comprises a set of layer-specific services. In addition, uppermost there is a service layer which functions as an interface to the network services provided by the telephone network, i.e. to the services received by the client. According to the invention, from the upper service layers there is a direct connection arranged further to each of the lower layers, in which case the services may call another service, regardless of the fact of which layer the calling and the called service are located in.

In one embodiment of the invention, the service development environment comprises a master layer which has been arranged to start and stop the aforementioned services and to monitor them. In addition, each service has been so arranged that it notifies the master layer of the message type that the aforementioned service wants the master layer to transmit. The master layer chains the services under the control of the service layer in order to implement the desired service logic entity.

In addition, the service development environment may comprise a basic service layer which has been arranged to implement simple service tools for the other layers. The responsibility of the layer is to implement the simple basic services by logically combining the desired messages. In addition, the services provided by the layer may offer tools for the services by implementing different character changes and by offering connections to external service logics.

In one embodiment of the invention, a protocol controller is arranged in the basic service layer which protocol controller has been so arranged that it is responsible for the protocols to be used.

In one embodiment of the invention, the service development environment comprises a dialogue layer which is protocol-specific and which has been so arranged that it changes the logic operation into several signaling messages in the telephone network. The dialogue layer takes care also of the time monitoring of the messages by means of a time monitoring counter and of the protocol negotiations between the network elements.

The service development environment may also comprise an adaptation layer which is arranged to code and decode messages between the aforementioned telephone network and the aforementioned layers. The adaptation layer attends to the message switching between the service development environment and the telephone network itself.

In one embodiment, the service development environment may comprise a monitoring layer which has been arranged to monitor the operation of the other layers. It is also possible to arrange in the monitoring layer a testing environment which enables one to input the message into any layer.

In one embodiment of the invention, the service development environment comprises an interface layer arranged to adapt the connections of the other layers into the components of the telephone network.

As compared to prior art, the invention provides the advantage that the maintaining of the service development environment is easier, when the changes in the devices and networks may be so restricted that they cause changes only in one layer. Furthermore, there is the advantage that the changes in networks cause changes only in one layer. In that case, all the external interfaces may be made uniform from the point of view of the services, regardless of the technique by which the interfaces have been implemented. As a summary it may be stated that the invention remarkably eliminates the restrictions of the known service development environments seen from the point of view of the service developer.

### BRIEF DESCRIPTION OF THE DRAWINGS

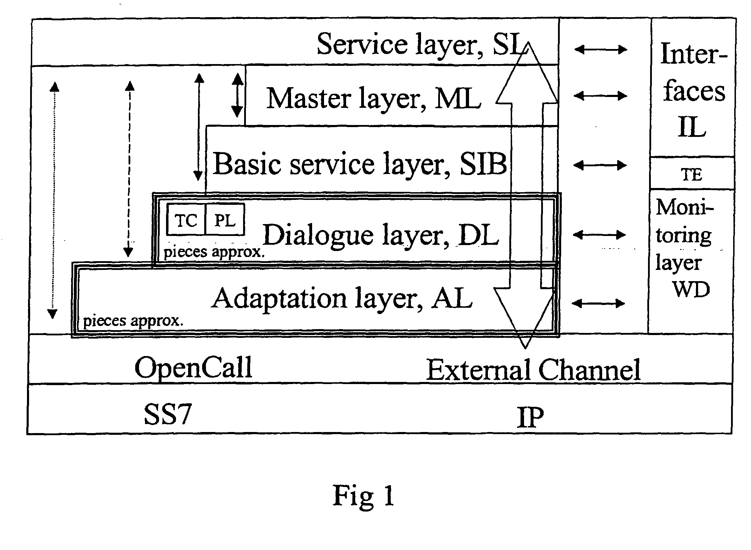

In the following section, the invention will be described by the aid of the attached examples of its embodiments with reference to the accompanying drawing which represents one basic architecture of the invention.

### DETAILED DESCRIPTION OF THE DRAWINGS

The basic architecture presented in the drawing has in this example been divided into seven layers, although there may be even more layers depending on the application. It must be specially noted that there may be one or more dialogue layers DL and adaptation layers AL depending on the protocols and network technique used.

Uppermost in the layer hierarchy there is described the service layer SL, which is the interface between the services provided and their users. In a traditional solution, the service layer SL has one single interface via which it has been able to order or request the lower layers for services. One interface has been very restricted for the implementation of special services.

Following in the hierarchy there is described the master layer ML, which is responsible for the starting up of the services. Each service or SLP (Service Logic Program, SLP) (not presented in the drawing) tells the master layer ML what kind of message it is interested in. The master layer ML also chains the services and is responsible for the changing over to a new service. It may also use another service as a "subprogram". Further, one of the operations of the master layer ML include the monitoring of services and stopping them.

The basic service layer SIB, which in the drawing has been described as situated below the master layer ML, offers simple basic services by logically combining desired messages. For example, the transmission of a short message SMS could be as follows: (SendRoutingInfo for SMS + Forward SMS (mt)). In that case, the basic service layer would offer a simple message transmission to some other layer as a part of the service implementation of the other layer. The basic service layer SIB also provides the services with tools: e.g. the transformation ASCII text <-> into a 7- bit SMS message controls the use of an external service data point (Service Data Point, SDP) (not presented in the drawing), etc. The basic service layer SIB is also informed of the fact of what protocol each time is used.

The dialogue layer DL, which is presented as the following from the basic service layer SIB, is protocol-specific. Exactly for this reason, if there are several protocols in use, there has to be a corresponding amount of dialogue layers DL. The dialogue layer builds and decodes one logic operation into several SS7 messages. SS7 is a signaling practice used in the intelligent network, Signaling System #7. The dialogue layer DL also takes care of the time monitoring of the dialogue layer by a time monitoring counter TC disposed in the dialogue layer. It is the dialogue layer which also notifies the service, if the network is not responding to the service request made by the service. The service is released, if it is not notified of the fact that the network is not responding in time. In addition, there is a protocol counter PL in the dialogue layer which is responsible for the compatibility of the protocol version with the other network components.

After the dialogue layer comes the adaptation layer AL, which is also protocol-specific. The adaptation layer AL hides the coding and decoding of separate messages from the services, and in addition, it hides also the addresses of the network. The purpose of the adaptation layer is in practice to act as the access interface between the actual telephone network and other components.

On the right side in the drawing there are described also two layers carrying out the peripheral operations in a certain way. Up on the right side there is an interface layer IL which offers the interface for the use of the database, for different alarm operations in the network, for the generation of call tickets and logs. At the same time, an interface is automatically formed to the billing of the telephone network.

Below the interface layer there is presented the monitoring layer WD, which may also be called by the generally known concept "watch dog". True to its name, the monitoring layer monitors the operation of the other layers, measures the load in the system and is responsible for the distribution of load based on the measurements. In addition, the monitoring layer WD offers a testing tool by which the desired test message may be buffered to any interface.

Lowermost in the drawing there are presented, by way of example, network interfaces to which the application environment of the invention could relate. One example is an OpenCall environment, which is the signaling and service control environment of Hewlett Packard. OpenCall is a trademark of Hewlett Packard. In addition, there are described the interfaces to SS7 and IP protocols.

In conclusion we are stating that above there has been described one embodiment of the invention, to which the invention is in no way restricted. As stated already earlier and as is apparent from the drawing, it is important from the point of view of the invention that from each one of the layers there is a connection to all the other layers. This applies also in such an application that is not described herein, but which is possible and in which there are more or less layers than the seven presented herein.

The invention is not restricted merely to the examples of its embodiments referred to above, instead many variations are possible within the scope of the inventive idea defined by the claims.

## Claims

1. A service development environment in a telephone network comprising a set of services (SLP), wherein
the aforementioned services (SLP) have been grouped in layers in such a way that each one of the aforementioned layers comprises a set of layer-specific services, and
as the uppermost layer there is arranged a service layer (SL) adapted to act as an interface to the network services provided by the telephone network,
**characterized in that**
there is a direct connection arranged from the upper service layers to each of the lower layers.

2. The service development environment according to claim 1, **characterized in that** the service development environment comprises a master layer (ML) which has been arranged to start up and stop the aforementioned services (SLP) and to monitor them.

3. The service development environment according to claim 2, **characterized in that** each aforementioned service (SLP) has been arranged to inform the aforementioned master layer (ML) of the message type that it wishes the master layer (ML) to transmit.

4. The service development environment according to claim 2, **characterized in that** the aforementioned master layer (ML) has been arranged to chain the aforementioned services (SLP) under the control of the aforementioned service layer (SL).

5. The service development environment according to claim 1, **characterized in that** the service development environment comprises a basic service layer (SIB) which has been arranged to implement simple service tools for all the other layers.

6. The service development environment according to claim 5, **characterized in that** the aforementioned basic service layer (SIB) has been arranged to logically combine the desired messages in order to implement simple basic services.

7. The service development environment according to claim 5, **characterized in that** in the aforementioned basic service layer (SIB) there is arranged a protocol controller (PC) which has been so arranged that it is responsible for the protocols to be used.

8. The service development environment according to claim 1, **characterized in that** the service development environment comprises a dialogue layer (DL) arranged to be protocol-specific and to change the logic operation into several signaling messages in the telephone network.

9. The service development environment according to claim 8, **characterized in that** in the aforementioned dialogue layer (DL) there is a time monitoring counter (TC) disposed that is so arranged that it is responsible for the time monitoring of the messages.

10. The service development environment according to claim 8, **characterized in that** in the aforementioned dialogue layer (DL) there is a protocol counter (PL) disposed that has been arranged to negotiate on the protocol version with the network elements of the aforementioned telephone network.

11. The service development environment according to claim 1, **characterized in that** the service development environment comprises an adaptation layer (AL) which has been arranged to code and decode the messages between the aforementioned telephone network and aforementioned layers.

12. The service development environment according to claim 1, **characterized in that** the service development environment comprises a monitoring layer (WD) which has been arranged to monitor the operation of other layers.

13. The service development environment according to claim 12, **characterized in that** in the aforementioned monitoring layer there is a testing environment (TE) arranged for inputting the messages into the desired layer.

14. The service development environment according to claim 1, **characterized in that** the service development environment comprises an interface layer (IL) arranged to adapt the connections of the other layers into the components of the aforementioned telephone network.

## Patentansprüche

1. Dienstentwicklungsumgebung in einem Telefonnetzwerk, das eine Menge von Diensten (SLP) umfasst, wobei
die vorerwähnten Dienste (SLP) in Schichten derart gruppiert sind, dass jede einzelne der Schichten eine Menge von schichtspezifischen Diensten umfasst, und
als die oberste Schicht eine Dienstschicht (SL) angeordnet ist, die dazu ausgebildet ist, als Schnittstelle zu den Netzwerkdiensten zu fungieren, die von dem Telefonnetzwerk bereitgestellt werden,
**dadurch gekennzeichnet, dass** es eine direkte Verbindung gibt, die von den oberen Dienstschichten zu jeder der unteren Schichten verläuft.

2. Umgebung nach Anspruch 1, **dadurch gekennzeichnet, dass** die Dienstentwicklungsumgebung eine Masterschicht (ML) aufweist, die so ausgebildet wurde, dass sie die vorerwähnten Dienste (SLP) einleitet und beendet und sie überwacht.

3. Umgebung nach Anspruch 2, **dadurch gekennzeichnet, dass** jeder vorerwähnte Dienst (SLP) derart ausgebildet wurde, dass er die genannte Masterschicht (ML) über den Nachrichtentyp informiert, von dem er wünscht, dass ihn die Masterschicht (ML) sendet.

4. Umgebung nach Anspruch 2, **dadurch gekennzeichnet, dass** die genannte Masterschicht (ML) derart ausgebildet wurde, dass sie die genannten Dienste (SLP) unter der Steuerung der genannten Dienstschicht (SL) verkettet.

5. Umgebung nach Anspruch 1, **dadurch gekennzeichnet, dass** die Dienstentwicklungsumgebung eine Basis-Dienstschicht (SIB) aufweist, die dazu ausgebildet wurde, einfache Diensthilfsmittel für sämtliche anderen Schichten zu implementieren.

6. Umgebung nach Anspruch 5, **dadurch gekennzeichnet, dass** die Basisdienstschicht (SIB) dazu ausgebildet wurde, die erwünschten Nachrichten logisch zu kombinieren, um einfache Grunddienste zu implementieren.

7. Umgebung nach Anspruch 5, **dadurch gekennzeichnet, dass** in der vorerwähnten Basisgrundschicht (SIB) eine Protokollsteuerung (PC) ausgebildet ist, die so gestaltet ist, dass sie für die zu verwendenden Protokolle verantwortlich ist.

8. Umgebung nach Anspruch 1, **dadurch gekennzeichnet, dass** die Dienstentwicklungsumgebung eine Dialogschicht (DL) aufweist, die dazu ausgebildet ist, protokollspezifisch zu sein und die logische Operation in mehrere Signalisiernachrichten in dem Telefonnetzwerk umzuwandeln.

9. Umgebung nach Anspruch 8, **dadurch gekennzeichnet, dass** es in der Dialogschicht (DL) einen Zeitüberwachungszähler (TC) gibt, der derart ausgebildet ist, dass er für die Zeitüberwachung der Nachrichten verantwortlich ist.

10. Umgebung nach Anspruch 8, **dadurch gekennzeichnet, dass** in der Dialogschicht (DL) ein Protokollzähler (DL) angeordnet ist, der dazu ausgebildet ist, mit den Netzwerkelementen des Telefonnetzwerks über die Protokollversion zu verhandeln.

11. Umgebung nach Anspruch 1, **dadurch gekennzeichnet, dass** die Dienstentwicklungsumgebung eine Adaptionsschicht (AL) aufweist, die so ausgebildet wurde, dass sie die Nachrichten zwischen dem Telefonnetzwerk und den genannten Schichten codiert und decodiert.

12. Umgebung nach Anspruch 1, **dadurch gekennzeichnet, dass** die Dienstentwicklungsumgebung eine Überwachungsschicht (WD) aufweist, die dazu ausgebildet wurde, den Betrieb der übrigen Schichten zu überwachen.

13. Umgebung nach Anspruch 12, **dadurch gekennzeichnet, dass** sich in der Überwachungsschicht eine Testumgebung (TE) befindet, die dazu ausgebildet ist, die Nachrichten in die gewünschte Schicht einzuspeisen.

14. Umgebung nach Anspruch 1, **dadurch gekennzeichnet, dass** die Dienstentwicklungsumgebung eine Schnittstellenschicht (IL) aufweist, die dazu ausgebildet ist, die Verbindungen der anderen Schichten an Komponenten in dem Telefonnetzwerk anzupassen.

## Revendications

1. Environnement de développement de services dans un réseau téléphonique comprenant une série de services (SLP), dans lequel
les services (SLP) précités ont été groupés en couches d'une manière telle que chacune des couches précitées comprend une série de services spécifiques par couche, et
on a agencé, comme couche la plus élevée, une couche service (SL) adaptée pour fonctionner comme une interface vis-à-vis des services réseau fournis par le réseau téléphonique,
**caractérisé en ce que**
il y a une connexion directe établie entre les couches services supérieures et chacune des couches inférieures.

2. Environnement de développement de services selon la revendication 1, **caractérisé en ce que** l'environnement de développement de services comprend une couche maitre (ML) qui a été agencée pour démarrer et arrêter les services (SLP) précités et pour les piloter.

3. Environnement de développement de services selon la revendication 2, **caractérisé en ce que** chaque service (SLP) précité a été agencé pour informer la couche maître (ML) précitée du type de message qu'il souhaite que la couche maître (ML) transmette.

4. Environnement de développement de services selon la revendication 2, **caractérisé en ce que** la couche maître (ML) précitée a été agencée pour enchaîner les services (SLP) précités sous la commande de la couche service (SL) précitée.

5. Environnement de développement de services selon la revendication 1, **caractérisé en ce que** l'environnement de développement de services comprend une couche service basique (SIB) qui a été agencée pour mettre en application de simples outils de service pour toutes les autres couches.

6. Environnement de développement de services selon la revendication 5, **caractérisé en ce que** la couche service basique (SIB) précitée a été agencée pour combiner de manière logique les messages souhaités afin de mettre en application de simples services basiques.

7. Environnement de développement de services selon la revendication 5, **caractérisé en ce que**, dans la couche service basique (SIB) précitée, se trouve un contrôleur de protocole (PC) qui a été agencé de façon à être responsable des protocoles à utiliser.

8. Environnement de développement de services selon la revendication 1, **caractérisé en ce que** l'environnement de développement de services comprend une couche dialogue (DL) agencée pour être spécifique au protocole et pour modifier le fonctionnement logique en plusieurs messages de signalement dans le réseau téléphonique.

9. Environnement de développement de services selon la revendication 8, **caractérisé en ce que**, dans la couche dialogue (DL) précitée, se trouve un compteur de pilotage du temps (TC) agencé de façon à être responsable du pilotage du temps des messages.

10. Environnement de développement de services selon la revendication 8, **caractérisé en ce que**, dans la couche dialogue (DL) précitée, se trouve un compteur de protocole (PL) qui a été agencé pour négocier la version du protocole avec les éléments réseau du réseau téléphonique précité.

11. Environnement de développement de services selon la revendication 1, **caractérisé en ce que** l'environnement de développement de services comprend une couche adaptation (AL) qui a été agencée pour coder et décoder les messages entre le réseau téléphonique précité et les couches précitées.

12. Environnement de développement de services selon la revendication 1, **caractérisé en ce que** l'environnement de développement de services comprend une couche contrôle (WD) qui a été agencée pour contrôler le fonctionnement des autres couches.

13. Environnement de développement de services selon la revendication 12, **caractérisé en ce que**, dans la couche contrôle précitée, se trouve un environnement test (TE) agencé pour insérer les messages dans la couche souhaitée.

14. Environnement de développement de services selon la revendication 1, **caractérisé en ce que** l'environnement de développement de services comprend une couche interface (IL) agencée pour adapter les connexions des autres couches aux éléments du réseau téléphonique précité.
